# EUROPEAN PATENT SPECIFICATION

(11) **EP 3 438 903 B1**
(45) Date of publication and mention of the grant of the patent: **13.04.2022**
(21) Application number: 17775528.7
(22) Date of filing: 31.03.2017
(51) Int. Cl.: G06Q 20/38, G06F 21/64, H04L 9/32

(54) **HIERARCHICAL NETWORK SYSTEM, AND NODE AND PROGRAM USED IN SAME**
HIERARCHISCHES NETZWERKSYSTEM SOWIE KNOTEN UND PROGRAMM DAFÜR
SYSTÈME DE RÉSEAU HIÉRARCHISÉ, ET NOEUD ET PROGRAMME UTILISÉS DANS CE SYSTÈME

(30) Priority: 31.03.2016 JP 2016071343
(43) Date of publication of application: 06.02.2019
(73) Proprietor: bitFlyer Blockchain, Inc., Minato-ku Tokyo 1076237 (JP)
(72) Inventor: KANO, Yuzo, Tokyo 107-0052 (JP); KOMIYAMA, Takafumi, Tokyo 107-06208 (JP)
(74) Representative: Pinney, Matthew David
(86) International application number: PCT/JP2017/013574
(87) International publication number: WO 2017/170997

(56) References cited:
- JP-B1- 5 858 507
- US-A1- 2015 332 283
- Bitfury: "Public versus Private Blockchains Part 2: Permissionless Blockchains White Paper", , 20 October 2015 (2015-10-20), XP055384695, Retrieved from the Internet: URL:https://bitfury.com/content/downloads/ public-vs-private-pt2-1.pdf [retrieved on 2017-06-23]
- Sergio Demian Lerner: "RSK Bitcoin powered Smart Contracts Revision 9", , 19 November 2015 (2015-11-19), XP055491507, Retrieved from the Internet: URL:https://bravenewcoin.com/assets/Whitep apers/RootstockWhitePaperv9-Overview.pdf [retrieved on 2018-07-10]
- Sergio Demian Lerner: "Drivechains, Sidechains and Hybrid 2-way peg Designs - Revision 9", , 4 January 2016 (2016-01-04), XP055636008, Retrieved from the Internet: URL:https://docs.rsk.co/Drivechains_Sidech ains_and_Hybrid_2-way_peg_Designs_R9.pdf [retrieved on 2019-10-25]
- YASUYUKI FUCHIDA: "Innovation to Kin'yu Blockchain to Kin'yu Torihiki no Kakushin", Nomura Capital Markets Quarterly 2015 Nen the autumn issue, vol. 19, no. 2, 1 November 2015 (2015-11-01), pages 11-35, XP009507516, ISSN: 2185-4629

## Description

### Technical Field

The present invention relates to a hierarchical network system, and a node device and a computer program used in the hierarchical network, and particularly to a mechanism to transfer assets between networks.

### Background Art

Conventionally, there is known a technique called a block chain. The technique is a mechanism which makes the same record synchronized among a number of nodes on a network. In a case where a new record is added to the existing record, a block which is the unit of recordation takes over the contents (hash) of the previous block and is added sequentially in a chain shape as is its name. In general, the term "blockchain" indicates the structure of a database in which blocks are linked in a chain shape, but it may also be used in a broader sense such as a mechanism operating as a P2P network or a mechanism of approving transactions. At this moment, the definition is not set. In order to prevent confusion between two meanings, in this specification, the term will be called "blockchain" in a case where the former meaning of the narrow sense is used, or will be called "blockchain technology" in a case where the latter meaning of the broader sense is used.

Since the blockchain technology has many advantages such as zero downtime, difficulty of falsification, and low cost, not only virtual currencies including Bitcoin and its derivatives but also a method of managing information relating to various assets as transactions is beginning to attract attention. For example, Non Patent Literature 1 discloses the use of a blockchain that can take an important role in establishing reliability for the purpose of proving the existence and identity of various documents.

In addition, in Non Patent Literature 2, as illustrated in Fig. 14, a sidechain is introduced, and conventional independent blockchains of a plurality of cryptocurrencies are connected to each other, and the entire cryptocurrency assets are transferred as one blockchain. Non Patent Literature 2 describes that the sidechain is a concept of a side-chain of the blockchain which is a public distributed transaction ledger database, and that by having a two-ways peg in which the blockchain of Bitcoin is a main-chain it enables sufficient utilization of various resources such as research and development or a β test of an encryption technique or a new technique, a smart contract, and a registry of a real asset.

### Citation List

### Patent Literature

Non Patent Literature 1: Blockchain establishes a reliable relation in a cyber space -- Important meaning of "Existence Proof " and "Identity Proof", [online], [Retrieved on March, 28, 2016], Internet <URL:http://diamond.jp/articles/-/53050> Non Patent Literature 2: Bitcoin dreams of Internet Rise in "Side Chain"?, [online], [Retrieved on February 18, 2016], Internet
<http://btcnews.jp/blockstream-released-sidechains-whitepap er/>

### Summary of the Invention

### Technical Problem

By the way, in the block chain technique, all the nodes on a P2P network hold a copy of an expanded amount of transactions as a nature of the mechanism. Therefore, the number of transactions processed by one network per unit time is naturally limited. As a result, the scalability of the transaction processing is not secured and sufficient processing speed cannot be secured depending on the processing performance of each node and a network bandwidth.

In order to enhance the scalability, it is effective to divide one large network into a plurality of small networks, and subdivide the management units of transactions using the side chain technology. For example, a hub type topology is considered. However, in the case of the hub type, the networks are equal to each other, and there is no inferiority or superiority in reliability. Therefore, there is a problem in safety of asset transfer from one network to another.

The invention has been made in view of such situation, and an object thereof is to secure the safety in asset transfer between the networks.

### Solution to Problem

According to a first aspect, there is provided a hierarchical network system in which asset transfer is made between networks connected one above the other in a hierarchical structure. The hierarchical network system includes a upper network and a lower network. The upper network manages transactions performed in its own network and the asset transfers performed with other networks as a first transaction history. In addition, the upper network is allowed to perform asset transfer to a network at a lower level than its own network. On the other hand, the lower network is a network at a lower level than the upper network, and manages transactions performed in its own network and asset transfer performed to other networks as a second transaction history. In addition, the lower network is allowed to perform asset transfer to the upper network under a condition that a total amount of assets sent to the upper network does not exceed a total amount of assets received from the upper network with reference to the second transaction history.

Here, in the first aspect, in a case where at least one network is interposed on a path of the asset transfer from a network which is the transfer source of the asset to a network which is the transfer destination of the asset, it is preferable to repeat asset transfers between the networks connected one above the other in the hierarchical structure.

According to a second aspect, there is provided a node device for the upper network in the hierarchical network system of the first aspect. The node device includes a block generating unit and a transaction processing unit. The block generating unit generates a block which includes a first transaction, in which an address of the upper network is used as the transfer source of the asset, and an address of the lower network is used as the transfer destination of the asset. The first transaction is handled as disappearance of an asset in the upper network. The transaction processing unit allows the lower network to generate the asset related to the first transaction under a condition that the block is approved according to a predetermined approval protocol in the upper network.

According to a third aspect, there is provided the node device for the lower network in the hierarchical network system of the first aspect. The node device includes a block generating unit and a transaction processing unit. The block generating unit generates a block which includes a second transaction, in which an address of the lower network is used as the transfer source of the asset, and an address of the upper network is used as the transfer destination of the asset. The second transaction is handled as disappearance of an asset in the lower network. The transaction processing unit allows the upper network to generate the asset related to the second transaction under a condition that the block is approved according to a predetermined approval protocol in the lower network, and a total amount of the assets sent to the upper network does not exceed a total amount of the assets received from the upper network with reference to the second transaction history.

Here, in the second or third aspect, the transaction processing unit may include an approval requesting unit and a block finalizing unit. The approval requesting unit attaches the signature created by the private key of an own node to a block, and transmits an approval request of the block to a group of m (m ≥ 2) nodes in its own network. In a case where an approval result of the block is received from the node which is a request destination of the approval, the block finalizing unit verifies a validity of the signature attached to the approval result using the public key of the request destination of the approval, and adds the block to the first transaction history or the second transaction history under a condition that n (m ≥ n ≥ 1) or more nodes in the m nodes approve.

In the second or third aspect, the first transaction history or the second transaction history may be managed by a distributed database in which the nodes in the upper network or the nodes in the lower network store the same contents in synchronization, and the blocks, units of recordation, are linked in a recording order.

According to a fourth aspect, there is provided a computer program for the upper network in the hierarchical network system of the first aspect. The computer program causes a computer to perform a process which includes a first step of generating a block containing a first transaction in which an address of the upper network is used as the transfer source of the asset, and an address of the lower network is used as the transfer destination of the asset, and a second step of allowing the lower network to generate the asset related to the first transaction under a condition that the block is approved according to a predetermined approval protocol in the upper network. The first transaction is handled as disappearance of the asset in the upper network.

According to a fifth aspect, there is provided a computer program for the lower network in the hierarchical network system of the first aspect. The computer program causes a computer to perform a process which includes a first step of generating a block containing a second transaction in which an address of the lower network is used as the transfer source of the asset, and an address of the upper network is used as the transfer destination of the asset, and a second step of allowing the upper network to generate the asset related to the second transaction under a condition that the block is approved according to a predetermined approval protocol in the lower network, and a total amount of the assets sent to the upper network does not exceed a total amount of the assets received from the upper network with reference to the second transaction history. The second transaction is handled as disappearance of the asset in the lower network.

Here, in the fourth or fifth aspect, the second step may include a step of transmitting an approval request of the block to m (m ≥ 2) nodes in its own network after attaching a signature created by a private key of an own node to the block, and a step, in a case where an approval result of the block is received from the node which is a request destination of the approval, of verifying a validity of the signature attached to the approval result using a public key of the request destination of the approval and adding the block to the first transaction history or the second transaction history under a condition that n (m ≥ n ≥ 1) or more nodes in the m nodes approve.

In addition, in the fourth or fifth aspect, the first transaction history or the second transaction history is preferably managed by a distributed database in which the nodes in the upper network or the nodes in the lower network store the same recording contents in synchronization, and the blocks, units of recording, are linked in a recording order.

### Advantageous Effects of Invention

According to the invention, an asset transfer from a lower network to a upper network is allowed under a condition that a total amount of the assets sent to the upper network does not exceed a total amount of the assets received from the upper network. In this way, in the hierarchical structure, the upper network is more reliable than the lower network. By regulating a total amount of the asset transfer from the lower network with less reliability, the asset transfer between the networks can be safely performed without advanced approval process between the networks.

### Brief Description of Drawings

Fig. 1 is a diagram illustrating a configuration of a hierarchical network system according to the embodiment.
Fig. 2 is a diagram for describing an asset transfer between networks.
Fig. 3 is a diagram for describing the asset transfer over networks in a hierarchical structure.
Fig. 4 is a diagram illustrating a physical configuration of a network.
Fig. 5 is a diagram illustrating a logical configuration of a network.
Fig. 6 is a diagram for describing a setting method of a public key in a private node.
Fig. 7 is a diagram for describing a normal transaction and a delivery transaction.
Fig. 8 is a functional block diagram of a node device for a public node.
Fig. 9 is a functional block diagram of the node device for the private node.
Fig. 10 is a diagram illustrating a flow of a recording process of a transaction.
Fig. 11 is a diagram illustrating a state of processing standby of a transaction.
Fig. 12 is an explanatory diagram of approval of a block by a multisignature.
Fig. 13 is an explanatory diagram of a database structure.

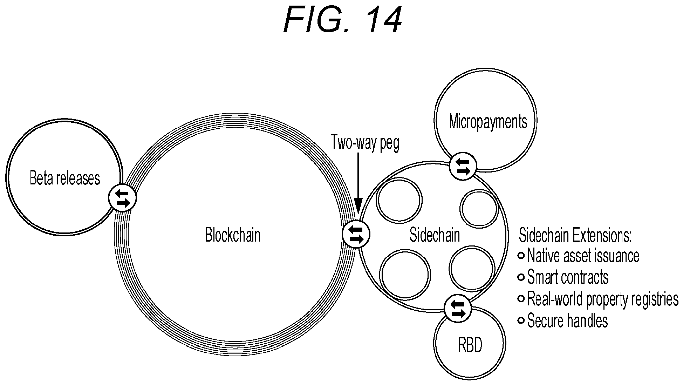

Fig. 14 is a diagram illustrating an outline of a sidechain in the related art.

### Description of Embodiments

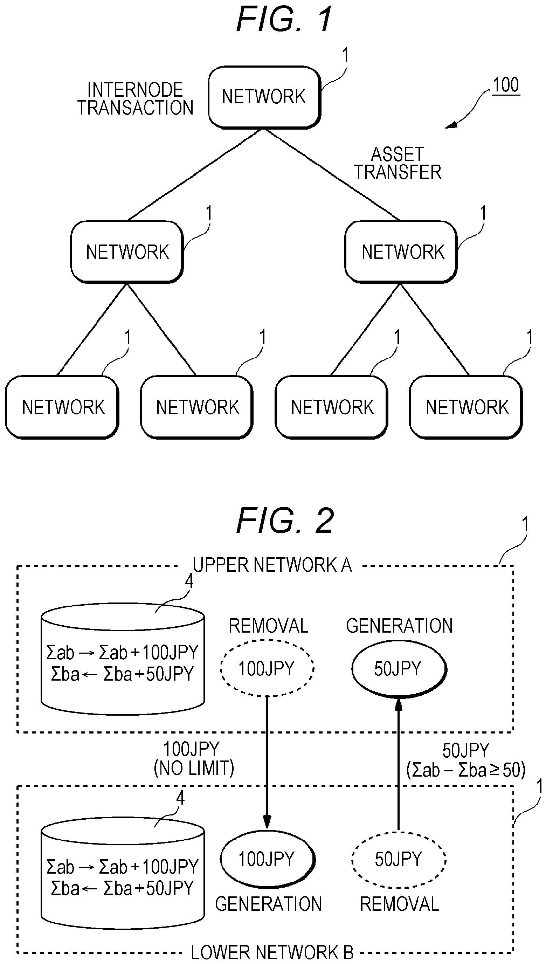

Fig. 1 is a diagram illustrating a configuration of a hierarchical network system according to the embodiment. A hierarchical network system 100 comprises a plurality of networks 1 hierarchically placed one above the other, and has a tree structure in which a number of networks 1 are linked while branching from the highest-level network 1 toward lower layers . Each of the networks 1 manages transactions performed in its own network 1 and an asset transfer performed with other networks 1 as a transaction history. In each of the networks 1, a target of transaction management is determined in advance as a system specification depending on the application. For example, in the case of a bank system, a real currency is a transaction target. In the case of a securities system, a securities transaction is a transaction target. In this specification, the "transaction" refers to a concept of not only retaining (stock) asset or state of the asset such as real currencies, virtual currencies, securities, and real estates, but also transfer (flow) of asset, and contract. The contract can be both asset and debt. In addition, the transaction may be defined in broader range with the introduction of a derivative concept. Further, the assets handled by each of the networks 1 may be a similar type, or the networks 1 may handle different assets. For example, one network 1 may handle yen, and another network 1 may handle dollar.

For example, "to send one hundred million yen from A to B" or "to receive 500 specific shares from A to B" is identical to the transfer (flow) of an asset, and the transaction may be understood as a one-directional transaction. The expression "A holds savings of one hundred million yen" or "A holds 500 specific shares" may be considered as an asset, or may be considered as a concept of a retaining (stock) state of an asset. The expression "A purchases US dollars as much as one hundred million yen from B" or "A purchases 500 specific shares for 1,000 yen per share from B" may be considered as a bi-directional transaction in which two transfers (flow) of assets occur at the same time.

Fig. 2 is a diagram for describing asset transfer between the networks 1. The asset transfer is performed between the networks 1 connected one above the other in a hierarchical structure. However, the assets are not physically transferred, but the asset transfer is realized by a pair of processes of "disappearance" of an asset in the network A (or B) of the transfer source, and "generation" of the equivalent asset in the network B (or A) of the transfer destination, instead of physically moving the asset. For example, in a case where 100 yen is moved from the upper network A to the lower network B (hereinafter, referred to as "downward asset transfer"), 100 yen "disappears" from the upper network A while 100 yen is "generated" in the lower network B. In addition, in a case where 50 yen is moved from the lower network B to the upper network A (hereinafter, referred to as "upward asset transfer"), 50 yen "disappears" from the lower network B while 50 yen is "generated" in the upper network A.

The asset transfer between the networks A and B is recorded and managed as transaction histories in databases 4 which are included in respective networks A and B. The database 4 of the upper network A manages the transactions in its own network A, and manages also the asset transfers in which its own network A becomes a transfer source/transfer destination. Similarly, the database 4 of the lower network B manages the transactions in its own network B, and manages also the asset transfers in which its own network B becomes a transfer source/transfer destination.

In addition, with respect to asset transfer between network A and network B, higher reliability is given to the upper layer than the lower layer. Therefore, the highest-level network 1 is the most reliable one, and the reliability decreases in a descending order from the second hierarchy to the third hierarchy. Then, the downward asset transfer in which the upper network A having a high reliability is the transfer source is unlimitedly allowed without restricting a total amount of transferring assets as a principle. On the other hand, the upward asset transfer in which the lower network B having a low reliability is the transfer source is allowed under the condition that the total amount Σba of assets sent to the upper network A does not exceed the total amount Σab of assets received from the upper network A. In the example of Fig. 2, the transfer of 100 yen from the upper network A to the lower network B is unlimitedly allowed, but the transfer of 50 yen from the lower network B to the upper network A is allowed under the condition that Σab - Σba ≥ 50 is satisfied. As described above, only the highest-level network 1 is not limited in the asset transfer. The other networks 1 are limited in the asset transfer.

In this way, the total amount of the upward asset transfers in which the lower network B having a low reliability is the transfer source is regulated. Therefore, from the viewpoint of the upper network A, it is guaranteed as a system that the assets are returned only within the range of the total amount Σab of the assets sent to the lower network B. With this configuration, even if a falsified asset transfer occurs in part of the network system 100, an advert influence therefrom can be suppressed at minimum, and an improvement of the safety of the network system 100 is achieved.

Further, the total amount of the asset transfers can be obtained by retrieving the history relating to the asset transfers between the networks in the transaction history recorded in the database 4, and adding each amount. However, performing such a retrieving and adding every time an asset transfer occurs causes a decrease in the processing speed. Therefore, the total amount of the asset transfers is preferably managed using an index as part of the transaction history.

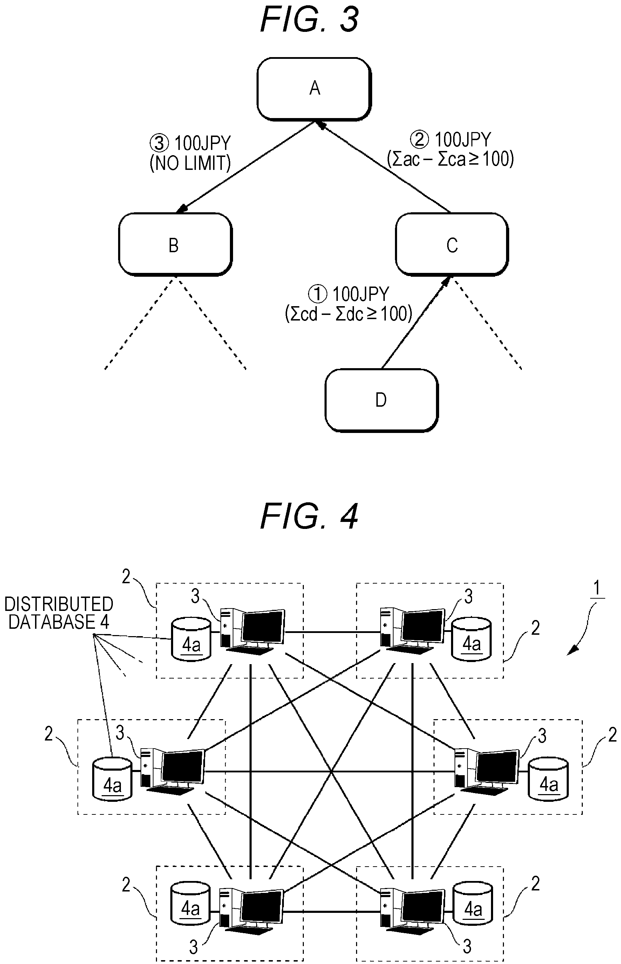

Fig. 3 is a diagram for describing an asset transfer over the networks in the hierarchical structure. In a case where an asset (for example, 100 yen) is transferred from a network D to the network B, the asset is passed through the networks C and A on the transferring path. In such a transfer, the asset transfer between the networks (D → C, C → A, and A → B) connected one above the other in the hierarchical structure is repeated. At this time, the upward asset transfer (D → C) necessarily satisfies the condition (Σcd - Σdc ≥ 100), and the upward asset transfer (C → A) necessarily satisfies the condition (Σac - Σca ≥ 100). In this way, even when the transfer source and the transfer destination of the asset are separated, the asset transfer between the networks connected one above the other is repeated, so that the asset can be transferred.

Fig. 4 is a diagram illustrating a physical configuration of the network 1 of the hierarchical network system 100. Each network 1 is a P2P (Peer to Peer) network, and includes not only a pure P2P but also a so-called hybrid type (a client server is partially included). Nodes 2 participating (connected) in the network 1 are in communication (P2P communication) in a one-to-one even relation. Each of the nodes 2 is a node device, and includes a computer 3 and a database 4a. The information on transactions in the same network and asset transfers between the networks connected one above the other is managed by the distributed database 4 on the network 1, namely the aggregate of the databases 4a which are provided on respective nodes 2. All the databases 4a existing on the network 1 operate in synchronization by a blockchain technology, and basically hold the same recording contents. In a case where the node 2 having authority updates the distributed database 4, the node 2 notifies the other nodes 2 connected thereto of the updating. Thereafter, the notification is finally sent over the entire network 1 by repeating P2P communication between the nodes. With this configuration, all the databases 4a of the nodes 2 are updated, and share the same recording contents.

The P2P communication in the network 1 is performed by an SSL communication to secure security. In addition, the validity of the transaction transferred between the nodes 2 is verified by an electronic signature using a public key encryption. As a premise, each of the nodes 2 holds a private key (code number) of an address managed by the own node (an owner of the network address = a holder of the private key). The public key is uniquely specified by the private key. The public key itself may be used as the network address, or the network address may be generated by adding a checksum to the hash of the public key similarly to Bitcoin. A sender of fa transaction (transfer source of an asset) transmits the transaction after attaching a signature created by the private key of an address managed by the own node to the sending transaction. A receiver of a transaction verifies the validity of the signature attached to the received transaction using the public key corresponding to the private key. Further, the public key encryption used here is different from the public key encryption of a multisignature relating to block approval described below. The private key of the multisignature is not related to the network address, and only held by a private node 2b.

Further, Fig. 4 illustrates a full-connect type in which each node 2 is connected to all the other nodes 2, which is mere exemplary, and any topology may be employed. In addition, in a case where information is transmitted to a specific node 2, there may be introduced a protocol in which an address is designated to directly communicate with a transmission destination instead of an indirect P2P communication. In addition, in a case where the asset transfer is performed between the networks 1, all the nodes 2 may have access to another network 1. However, the accessible nodes 2 is preferably limited from the viewpoint of securing safety.

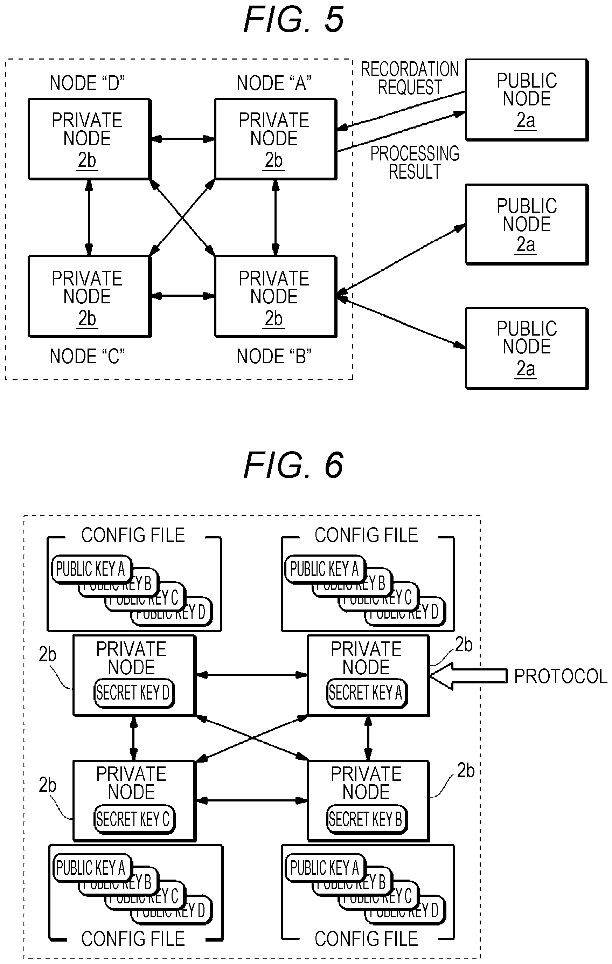

Fig. 5 is a diagram illustrating a logical configuration of the network 1. In this embodiment, the nodes 2 of the network 1 include public nodes 2a and private nodes 2b. The public node 2a is an application node which is a subject of a transaction (an unreliable node may be included) . The public node 2a generates a transaction written with the information on the transaction, attaches the signature thereto, and directly or indirectly transmits the transaction to a group of the private nodes 2b. The public node 2a performs only a recordation request of the transaction to the group of private nodes 2b, and a recording process to the distributed database 4 is not performed on the public node. Important things for the public node 2a are being able to make a query (even not a latest one), to sign on a newly created transaction, and to request an approval of a transaction to the group of private nodes 2b.

Further, for example, when a retrieval is made such as when a balance of a certain address is calculated, a recording contents of the database 4a may be indexed in some of the plurality of public nodes 2a in order to achieve a high processing speed. The data of the distributed database 4 is basically a key-value type. Therefore, there is a defect that it takes a lot of time in a conditional inquiry. In order to solve the defect, a node with an original index (including a total amount of the asset transfer described above) for retrieval is provided to expand an application range.

The private node 2b is a reliable node in which the number of nodes is restricted, and performs the recording process to the distributed database 4 with respect to the transaction requested from the public node 2a. The recording process is performed by the cooperation among the group of private nodes 2b as described below. In a case where the recording process is completed, notification of a processing result is provided to the public node 2a which is the request source. An important thing for the private node 2b is to approve transactions and form a block to add it to the distributed database 4. The mining used in virtual currencies such as Bitcoin and Rewards (incentives) such as commission are not necessary.

A plurality of private nodes 2b perform the block approval by the multisignature relating to the block approval using a public key encryption. Therefore, as illustrated in Fig. 6, each private node 2b includes the private key of the own node. Further, a CONFIG file with public keys written therein is read when the system is activated, and the public keys are shared among the private nodes 2b. In addition, there is prepared a protocol which adds or invalidates a public key of the private node 2b. When the protocol is executed, a public key is added or invalidated without rewriting the CONFIG file. Information relating to public keys needs to be strictly managed so that the information is handled for example using SSL to secure safety.

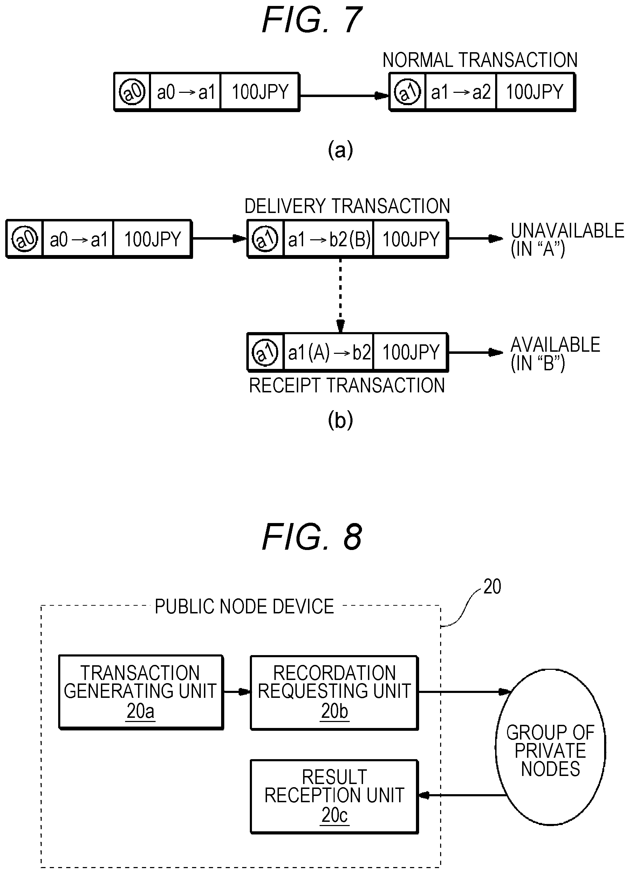

Fig. 7 is a diagram for describing a normal transaction and a delivery transaction. In the transactions handled in each network 1, there are normal transaction and delivery transaction (and reception transaction). These two types of transactions are both treated as one transaction on the system processing, but the transfer destination or the transfer source of the asset described therein are different.

As illustrated in (a) of the drawing, in the normal transaction such as "to move 100 yen from a transfer source a1 to a transfer destination a2", the transaction content between the addresses a1 and a2 in the same network A is described together with the signature by the private key of the transfer source a1. The asset relating to the transaction continues to be usable in the network A after finalization of a block described below. In other words, the address a2 corresponding to the transfer destination (TxOut) of the asset in the normal transaction can create a new transaction in which its own address is the transfer source (TxIn) after the transaction is finalized. In other words, the address a2 can perform a new asset transfer.

On the other hand, as illustrated in (b) of the drawing, in the delivery transaction such as "to move 100 yen from the address a1 (of the network A) to the address b2 (of the network B)", the content of the asset transfer between different networks A and B is described together with the signature by the private key of the transfer source a1. The delivery transaction is sent to an address the private key of which is unknown to anyone so that it is treated as an unusable one in the network A (disappearance of an asset) similarly to Proof of Burn used in Bitcoin. The address the private key of which is unknown to anyone can be determined for example by calculation such as addition or concatenation of bit strings of network B's chain identifier and the address b2 for example in the case of the address b2 of the network B. As described below, the private key may be simply treated as an address the private key of which is unknown to anyone using a Peg flag. Alternatively, a reception transaction having an equivalent value is generated in the network B. It is preferable that the reception transaction be uniquely generated in a one-to-one relation with respect to the delivery transaction. By this, the address b2 of the reception transaction corresponding to the transfer destination (TxOut) of the asset can create a new transaction in which its own address is the transfer source (TxIn) after the transaction is finalized. In other words, the address b2 can perform a new asset transfer.

As a specific way of linking the blockchains of the respective networks 1, a two-ways peg may be used for example. In the case of the downward asset transfer (Peg to a lower chain), the Peg flag is attached to the transfer destination (TxOut) of the delivery transaction, and the chain identifier to designate a chain of the transfer destination is set. The chain identifier is written in a genesis block (head block) of the chain for example, and is cannot be changed thereafter. The delivery transaction attached with the Peg flag has a similar effect to the Proof of Burn in the chain, and is not possible to be used again. In a case where the received asset is used in the chain of the transfer destination, the chain identifier of the transfer source is designated.

In addition, if the exactly same method as the downward asset is employed in the case of the upward asset transfer (PegBack from a lower-level chain), there is a concern that an asset worthless to the higher-level chain is returned (the lower-level chain is recognized to be low in authority or reliability compared to the higher-level chain). Then, in the case of PegBack, as described above, the asset can only be returned within a range of the total amount sent by Peg from the higher-level chain to the lower-level chain.

As a condition of generating the reception transaction in the transfer destination of the asset, first, an approval needs to be obtained according to a predetermined approval protocol in the network of the transfer source with respect to the block related to the delivery transaction. In other words, the block is finalized. Secondly, in the case of the delivery transaction related to the upward asset transfer, the total amount of the asset sent to the upper network can not exceed the total amount of the assets received from the upper network.

Fig. 8 is a functional block diagram of the node device of the public node 2a (hereinafter, referred to as "public node device 20"). The public node device 20 includes a transaction generating unit 20a, a recordation requesting unit 20b, and a result receiving unit 20c. The transaction generating unit 20a generates a transaction (normal transaction/delivery transaction) noted with information on the transaction according to a predetermined format. The information on the transaction is obtained, for example, by information input by a user according to instructions on a display screen, or information received through another network. The recordation requesting unit 20b attaches the signature created by the private key of the address managed by the own node to the transaction generated by the transaction generating unit 20a, transmits the transaction to a group of private nodes 2b through the P2P communication among the nodes 2, and requests the recording of the transaction to the group of private nodes 2b. The result receiving unit 20c receives the processing result of the transaction transmitted from one of the private nodes 2b, and presents the result to the user.

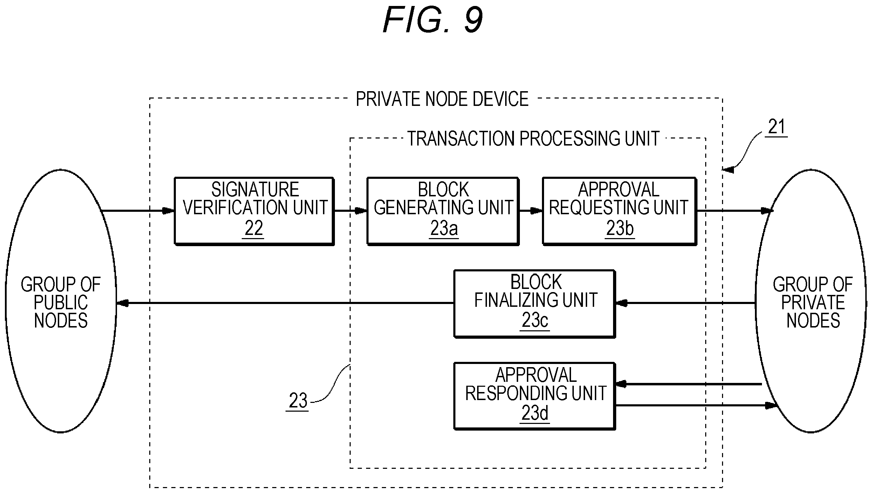

Fig. 9 is a functional block diagram of the node device for the private node 2b (hereinafter, referred to as "private node device 21"). The private node device 21 includes a signature verification unit 22 and a transaction processing unit 23. The signature verification unit 22 verifies the validity of the signature attached to the transaction which is received as the recordation request from the public node 2a using the public key corresponding to the private key. Further, besides the signature, it is also verified whether the assets are not used in duplicate.

On an assumption that the signature is verified as valid, and in a case where a predetermined condition is satisfied, the transaction processing unit 23 records the transaction in the distributed database 4. The transaction processing unit 23 includes a block generating unit 23a, an approval requesting unit 23b, a block finalizing unit 23c, and an approval responding unit 23d.

Herein, the private node device 21 takes two roles. One role is to generate a block by the own node 2b and to request an approval of the block to the other nodes 2b. As the configuration for this role, there are the block generating unit 23a, the approval requesting unit 23b, and the block finalizing unit 23c. Then, the other role is to approve blocks generated by the other nodes 2b. As the configuration for this role, there is the approval responding unit 23d. In this way, the private node 2b can be either a requester to request the approval of the block generated by the own node 2b to the other node 2b, or an approver to perform the approval of the block generated by the other node 2b.

The block generating unit 23a generates a block by collecting a plurality of transactions of which a request for recording process was received from a public node 2a which is the request source of the transaction recording. At that time, with respect to the delivery transaction related to the upward asset transfer, it is determined whether the total amount of the assets sent to the upper network 1 does not exceed the total amount of the assets received from the upper network 1. In a case where the total amount of the upward assets exceeds the total amount of the downward assets, the delivery transaction is regarded as an inappropriate transaction, and is not collected into a block (processing result = NG). The approval requesting unit 23b attaches the signature created by the private key of the own node 2b to the block generated by the block generating unit 23a, and transmits the approval request of the block to the other m (m ≥ 2) private nodes 2b which are set as a system configuration. The own node may be included in the nodes of the request destinations of the approval. In a case where an approval result of the block is received from the private node 2b of the request destination of the approval, the block finalizing unit 23c verifies the validity of the signature attached to the approval result using the public key corresponding to the private key of the request destination of the approval, and determines whether the following block finalizing condition is satisfied.

### [Block Finalizing Condition]

Among m (m ≥ 2) private nodes 2b requesting the approval, n (m ≥ n ≥ 1) or more nodes are approved.

In this block finalizing condition, "n" is preferably a majority of "m". By this, it is possible to secure the reliability of the approval within a reasonable and realistic range. For example, in a case where there are four private nodes 2b illustrated in Fig. 5, the block finalizing condition is satisfied when the request for approval is made to three (m = 3) private nodes 2b and approvals are obtained from two (n = 2) or more nodes.

It is preferable that "m" is a limited number such as one digit or two digits, and "m" may preferably be an odd number such as "5" or "9" according to the block determining condition. While "n" is described as a majority of "m", it may preferably be a predetermined number equal to or more the majority.

As the block finalizing condition, the above explanation has been described such that each node has one ballot for the approval. However, each node may be assigned with an arbitrary positive real number of ballots . The approval may be determined by a majority of the ballots. In this case, the "majority" is a number exceeding the half of the total ballots.

In a case where a block related to the approval request satisfies the block finalizing condition, the addition of the block to the distributed database 4 is finalized, and if not, the addition of the block to the distributed database 4 is not performed. The block finalizing unit 23c notifies the processing result (OK/NG) of the transaction to the public node 2a which is the request source of the transaction. In a case where the addition of the block to the distributed database 4 is finalized, the block is added to the database 4a of the own node 2b, and all the nodes 2 of the transaction processing network 1 are notified of the fact that a new block is added according to the block finalization. With the notification, the databases 4a of all the nodes 2, namely the distributed database 4 is updated.

While it is required that all the nodes 2 are notified directly or indirectly, all the private nodes 2b and some of the public nodes 2a, all the private node 2b, some of the private nodes 2b and some of the public nodes 2a, or some of the private nodes 2b may be notified in addition to the case where all the nodes 2 are notified directly or indirectly of the fact that a new block is added according to the block finalization.

On the other hand, in a case where an approval request of a block is received from a private node 2b which is a request source of the approval, the approval responding unit 23d verifies the validity of the signature attached to the approval request using the public key (corresponding to the private key of the request source of the approval). In addition, the approval responding unit 23d verifies the contents (including the consistency of the transactions in the block) of the block of the approval request with reference to data relating to the transactions which are recorded in the own node 2b. Then, in a case where it is verified that the contents are valid, the approval responding unit 23d transmits the approval result attached with the signature created by the private key of the own node 2b to the private node 2b which is the request source of the approval.

From the viewpoint of processing the delivery transaction, the approval requesting unit 23b, the block finalizing unit 23c, and the approval responding unit 23d serve as the transaction processing unit which allows the asset related to the delivery transaction to be generated with respect to the upper/lower network 1 which is the transfer destination of the asset. Specifically, in the case of the downward asset transfer, the generation of the asset related to the delivery transaction is allowed with respect to the lower network 1 under the condition that the approval of the block is obtained (that is, finalization of the block). In addition, in the case of the upward asset transfer, the generation of the asset related to the delivery transaction is allowed with respect to the upper network 1 under the condition that the approval of the block is obtained and the total amount of the asset sent to the upper network 1 does not exceed the total amount of the asset received from the upper network 1. The upper-level/lower-level network 1 which is the transfer destination of the allowed asset generates a reception transaction noted with the transaction contents corresponding to the transferring asset. Then, the asset is transferred from the transfer source to the transfer destination.

Further, in a case where one block is generated in the own node 2b as a countermeasure against the hacking of the private node 2b, namely a countermeasure against a case where the private node 2b is hacked, the block generating unit 23a does not continuously transmit an approval request of a new block but is on standby at least until the addition of a block generated by the other node 2b to the distributed database 4 is finalized. In other words, it is prohibited that the process of block finalization is continuously performed on the same private node 2b.

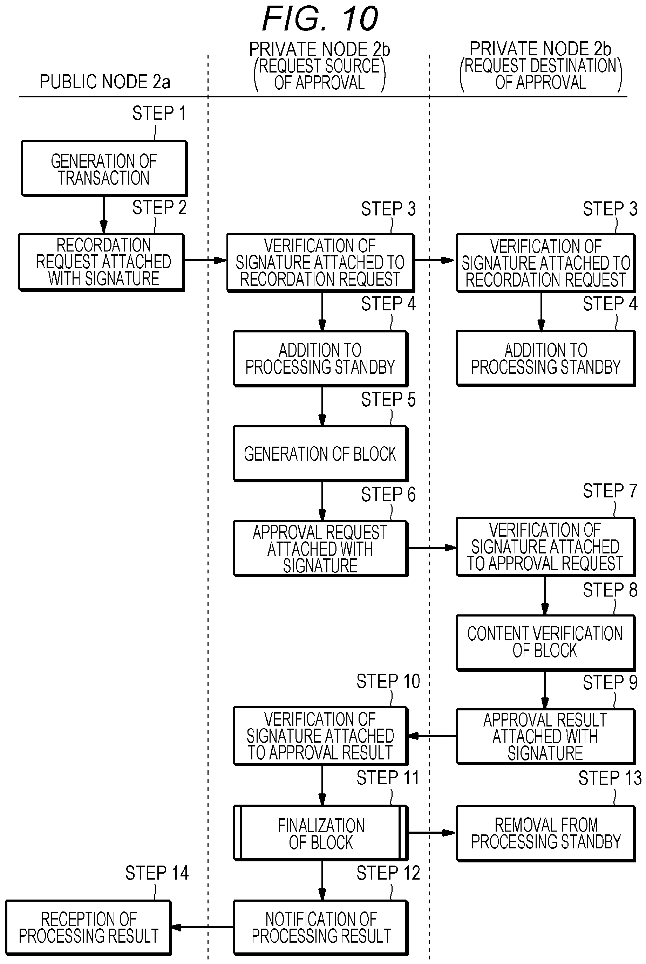

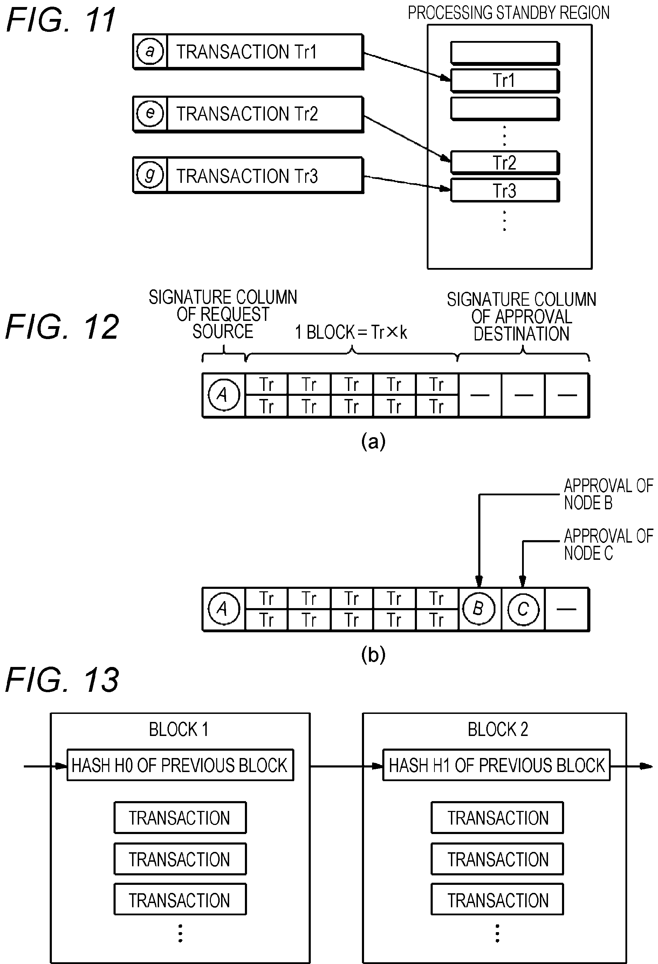

Next, a flow of the recording process of the transaction will be described with reference to Fig. 10. First, at a certain public node 2a, a transaction Tr noted with the information on the transaction is generated (step 1). After the signature created by the private key of the address managed by the own node is attached to the transaction Tr, the recordation request of the transaction Tr is transmitted to the group of private nodes 2b (step 2). For example, as illustrated in Fig. 11, the transaction Tr1 related to the transfer source a of the asset is attached with the signature "a" created by the private key of the address managed by the transfer source a, and the transactions Tr2 and Tr3 are similarly attached with the signatures.

Each of the private nodes 2b which receive the recordation request of the transaction Tr verifies the signature attached to the recordation request using the public key corresponding to the private key of the transfer source (step 3). As illustrated in Fig. 11, the signature "a" attached to the transaction Tr1 is verified using the public key of the transfer source a, and the transactions Tr2 and Tr3 are similarly verified. Further, besides the signature, it is verified whether the assets are not used in duplicate as described above. In each of the private nodes 2b, in a case where the validity of the signature can be confirmed, the transactions Tr1 to Tr3 are temporally stored in a predetermined storage region (processing standby region) in a storage device of the subject node 2b (step 4). In addition, in step 4, in a case where it is determined that the transfer source of the asset is not valid, the public node 2a which is the request source of the asset is informed of the fact.

In step 5, a block is generated by one of the private nodes 2b. The block is made by collecting the plurality of transactions Tr which are stored in the processing standby region of the own node 2b. Then, in step 6, an approval request attached with the signature having a data structure as illustrated in Fig. 12(a) is generated. The data structure includes a signature column of the request source which requests the block approval, a block body in which the plurality of transactions Tr are collected, and signature columns of the approval destinations of the block. However, the configuration of the drawing is presented for convenience sake, and the signature columns of the request source/the approval destination are not necessary in reality. In a case where the node A generates a block among four groups of private nodes 2b illustrated in Fig. 5 (node names are A to D), the signature "A" created by the private key of the node A is written in the signature column of the request source of Fig. 12(a), and the signature columns (the columns to be written with the signatures of the nodes B to D) of the approval destination are made blank. The approval request generated at the node A is transmitted to the other private nodes 2b, namely three nodes B to D.

Steps 7 to 9 are processes of the private nodes 2b, namely the request destinations B to D of the approval, which receive the approval request of the block. First, in step 7, the validity of the signature "A" or the like attached to the approval request is verified using the public key such as the node A which is the request source of the approval (step 7). In step 7, not only the node A but also the other signatures attached at the time of verification are verified together. Basically, the signatures are made in an order such as nodes A → B → C → D, and the block is finalized when a majority (n) of the signatures are obtained. Many ways of implementation may be considered on how to maintain the order. Further, the verification itself of the signatures of the block is performed not only on the private nodes 2b but also on all the public nodes 2a in order to prevent a hacked block to be believed. In a case where the approval request source is determined as valid, the procedure proceeds to step 8. In a case where it is determined as invalid, the processes from step 8 are not performed.

In step 8, the contents of the block related to the approval request is verified. Specifically, in a case where the contents of the block satisfy at least the following approval conditions with reference to the transactions stored in the processing standby region of the own node 2b, the block is approved. In a case where the contents of the block are determined as valid, the procedure proceeds to step 9. In a case where it is determined that the contents are invalid, the process of step 9 is not performed (processing result = NG).

### [Approval Condition of Block]

(1) All the transactions Tr in a block are not processed at the own node 2b (preventing double recording).
(2) The contents of all the transactions Tr in a block match with the contents of the transactions Tr stored in the processing standby region of the own node 2b (preventing data falsification).
(3) The assets of each transaction Tr are not used (preventing double use of the assets).

In step 9, the approval result attached with the signature is generated. In a case where the approval is possible, as illustrated in Fig. 12 (b), the signature created by the private key of the own node is written in a column assigned to the own node 2b among the signature columns of the approval destination. The approval result attached with the signature is transmitted to the request source A of the approval.

Steps 10 to 12 are processes of the private node 2b which receives the approval result of the block, namely the request source A of the approval. First, in step 10, the validity of the signature attached to the approval result is verified using the public keys of the request sources B to D of the approval (step 10). In a case where the request destination of the approval is determined as valid, the procedure proceeds to step 11. In a case where it is determined that the request destination is invalid, the processes from step 12 are not performed.

In step 11, in a case where n (m ≥ n ≥ 1) or more nodes have approved among the m private nodes, the block finalizing condition is satisfied, and it is finalized to add the block to the distributed database 4. In the example of Fig. 12(b), it means that approvals from two nodes B and C among three nodes B to D to which approval was requested are obtained, but an approval from node D is not obtained. In this case, if the block finalizing condition is the approval of the majority or more, n/m = 2/3 satisfies the condition. On the contrary, in the case of n = 0 or 1, the block finalizing condition is not satisfied.

In a case where the block finalizing condition is satisfied, the finalized block is recorded in the distributed database 4 by the request source A of the approval. Specifically, first, in the own node A, the transactions Tr included in the finalized block are removed from the processing standby region, and the finalized block is added to the database 4 of the own node. In addition, an instruction indicating that the finalized block is newly added is transmitted to the entire network 1 including other nodes B to D connected to the subject node A. All the nodes 2 in the network 1 verify the signature of the notification source when the notification of the finalized block is received, and add the finalized block to the database 4a of the own node. In addition, all the nodes 2 (including the nodes B to D) holding an unprocessed transactions Tr in the processing standby region remove the transactions Tr included in the finalized block from the processing standby region with this notification (step 13) . In this regard, in a case where the block finalizing condition is not satisfied, the block generated at this time is canceled. In response to this, the unprocessed transactions Tr of the processing standby region are continuously held, and the process waits for a chance to generate the next block.

Fig. 13 is an explanatory diagram of the structure of the database 4a. In this structure, blocks, which is a recordation unit, are linked in a chain shape in a recording order. Each block (finalized block) includes a plurality of transactions and a hash of the previous block. Specifically, a certain block 2 includes a hash H1 of the previous block 1 taken over from the previous block 1. Then, a hash H2 of the block 2 is calculated including a group of transactions of the own block 2 and the hash H1 taken over from the previous block 1. The hash H2 is taken over to the next block. In this way, while the contents of the previous block are taken over as the hash (H0, H1, ...), the blocks are linked in a chain shape in a recording order. Therefore, a consistent continuity is given to the recording contents, and thus falsification of the recording contents is effectively prevented. In a case where past recording contents are changed, the hash of the block becomes a value different from that before being changed. In order to make the falsified block appear correct, the hashes of all the subsequent blocks need to be recalculated, and such operation is significantly difficult in fact.

Then, in step 12, the public node 2a which is the recording request source of the transaction Tr is notified of the processing result (OK/NG) of the transaction Tr related to the recordation request from one of the private node 2b (the request source A of the approval). The public node 2a receives the processing result, and presents the processing result to the user (step 14). Through a series of processes above, the recording process of the transaction is ended.

Further, in the recording process of the transaction as described above, the plurality of private nodes 2b may generate individual blocks including the same transaction at the same time, namely the private nodes 2b may compete with each other in processing. Such a problem can be solved by performing exclusive control in which an order of block generation is assigned among the private nodes 2b, for example a round robin. In addition, priorities are assigned to the group of private nodes 2b and in a case where the competition occurs, the reprocessing of the transaction in competition may be allowed only to a higher priority private node 2b.

In this way, according to this embodiment, the blockchain is divided into a plurality of networks 1 instead of a single blockchain for the entire network system 100, and the blockchain is formed in unit of networks. With this configuration, the nodes 2 of each network 1 only need to store a copy of the transaction in its own network 1, but not necessary to store the transactions of the other networks 1. By this, the number of transactions which can be processed in unit time is dramatically improved in the entire network system 100. As a result, the scalability of the transaction process can be effectively secured, and a sufficient processing speed can be secured regardless of a processing performance of each node and a network bandwidth.

In addition, according to this embodiment, the asset transfer from the upper network 1 to the lower network 1 is allowed without limit. On the other hand, the asset transfer from the lower network 1 to the upper network 1 is allowed under the condition that the total amount of the asset sent to the upper network 1 does not exceed the total amount of the asset received from the upper network 1. In this way, in the hierarchical structure, the upper network 1 is more reliable than the lower network 1. By regulating the total amount of the asset transfer from the lower network 1 having a low reliability, the asset transfer between the networks 1 can be safely performed without the advanced approval process between the networks 1.

In addition, according to this embodiment, the nodes 2 of the transaction processing network 1 are classified into the public nodes 2a and the private nodes 2b. The public node 2a takes the role of generating a transaction to be recorded, and the recording process to the distributed database 4 thereafter is performed by cooperation among the group of private nodes 2b. In the transaction generation, the public nodes 2a are widely accepted including unreliable nodes. In the recording process to the distributed database 4, the process is limited to the private nodes 2b which are reliable. In this way, the role of the public node 2a and the role of the private node 2b are classified, so that the expansibility of applications which is the advantage of the public node scheme and the reliability of recording which is the advantage of the private node scheme can be achieved both.

Furthermore, according to this embodiment, as a method of authentication between the reliable private nodes 2b, a consensus algorithm which is relatively simple such as the multisignature using a public key encryption is used instead of a consensus algorithm which is expensive and slow such as POW and POS. Therefore, it is possible to process a large amount of transactions speedily and securely without damaging the reliability of the recording.

Further, the invention may be implemented as a computer program which realizes the public node device 20 or the private node device 21.

### Reference Signs List

- 1: network
- 2: node
- 2a: public node
- 2b: private node
- 3: computer
- 4a: database
- 4: database (distributed database)
- 20: public node device
- 20a: transaction generating unit
- 20b: recordation requesting unit
- 20c: result receiving unit
- 21: private node device
- 22: signature verification unit
- 23: transaction processing unit
- 23a: block generating unit
- 23b: approval requesting unit
- 23c: block finalizing unit
- 23d: approval responding unit
- 100: hierarchical network system

## Claims

1. A processing method at a node constituting either one of one or more lower networks in a network with an upper network and the one or more lower networks placed lower to the upper network, comprising steps of:
the node collecting a plurality of transactions comprising a transaction for causing a transfer of an asset from a lower network in which the node is included to the upper network; the node calculating the total amount of asset transfer to the upper network including the transaction and the total amount of asset transfer from the upper network with reference to a transaction history between the lower network in which the node is included and other networks;
the node generating a block with the transaction which causes a transfer of an asset from a lower network in which the node is included to the upper network only if the total amount of asset transfer to the upper network does not exceed the total amount of asset transfer from the upper network, and
the node finalizing the block under a condition that approvals from predetermined number of nodes within the nodes constituting the lower network in which the node is included is obtained to add the block to the transaction history.

2. The processing method according to claim 1,
wherein the transaction is treated as disappearance of an asset in the lower network, and
asset transfer to the upper network is performed by a transaction in the upper network which generates an asset with equivalent value with the asset disappearing from the lower network.

3. The processing method according to claim 1 or 2, wherein in the transaction of the lower network an address of the lower network is source of asset transfer and an address secret key of which is not known is destination of asset transfer.

4. The processing method according to any one of claims 1 to 3, wherein the transaction of the lower network has a chain identifier designating a blockchain of the upper network.

5. A program to have a computer perform a processing method at a node constituting either one of one or more lower networks in a network with an upper network and the one or more lower networks placed lower to the upper network, the method comprising steps of:
the node collecting a plurality of transactions comprising a transaction for causing a transfer of an asset from a lower network in which the node is included to the upper network;
the node calculating the total amount of asset transfer to the upper network including the transaction and the total amount of asset transfer from the upper network with reference to a transaction history between the lower network in which the node is included and other networks;
the node generating a block with the transaction which causes a transfer of an asset from a lower network in which the node is included to the upper network only if the total amount of asset transfer to the upper network does not exceed the total amount of asset transfer from the upper network, and
the node finalizing the block under a condition that approvals from predetermined number of nodes within the nodes constituting the lower network in which the node is included is obtained to add the block to the transaction history.

6. A node constituting either one of one or more lower networks in a network with an upper network and the one or more lower networks placed lower to the upper network,
wherein a plurality of transactions comprising a transaction for causing a transfer of an asset from a lower network in which the node is included to the upper network is collected;
wherein the total amount of asset transfer to the upper network including the transaction and the total amount of asset transfer from the upper network with reference to a transaction history between the lower network in which the node is included and other networks is calculated;
wherein a block with the transaction which caused a transfer of an asset from a lower network in which the node is included to the upper network is generated only if the total amount of asset transfer to the upper network does not exceed the total amount of asset transfer from the upper network, and
wherein the block is finalized under a condition that approvals from predetermined number of nodes within the nodes constituting the lower network in which the node is included is obtained and added the block to the transaction history.

## Patentansprüche

1. Verarbeitungsverfahren an einem Knoten, welcher eines von einem oder mehreren unteren Netzwerken in einem Netzwerk mit einem oberen Netzwerk bildet und wobei das eine oder die mehreren unteren Netzwerke unterhalb des oberen Netzwerks platziert sind, folgende Schritte umfassend:
Sammeln, durch den Knoten, einer Vielzahl von Transaktionen, umfassend eine Transaktion zum Veranlassen eines Transfers eines Vermögenswertes von einem unteren Netzwerk, in welchem der Knoten eingeschlossen ist, an das obere Netzwerk;
Berechnen, durch den Knoten, des Gesamtbetrags an Vermögenswert-Transfer an das obere Netzwerk, welcher die Transaktion einschließt, und des Gesamtbetrags an Vermögenswert-Transfer vom oberen Netzwerk mit Bezug auf eine Transaktionshistorie zwischen dem unteren Netzwerk, in welchem der Knoten eingeschlossen ist, und anderen Netzwerken;
Erzeugen, durch den Knoten, eines Blocks mit der Transaktion, welche einen Transfer eines Vermögenswertes von einem unteren Netzwerk, in welchem der Knoten eingeschlossen ist, an das obere Netzwerk nur dann veranlasst, wenn der Gesamtbetrag an Vermögenswert-Transfer an das obere Netzwerk den Gesamtbetrag an Vermögenswert-Transfer von dem oberen Netzwerk nicht überschreitet, und
Finalisieren des Blocks, durch den Knoten, unter einer Bedingung, dass Zustimmungen von einer vorbestimmten Anzahl von Knoten innerhalb der Knoten, welche das untere Netzwerk bilden, in welchem der Knoten eingeschlossen ist, erzielt werden, um den Block zu der Transaktionshistorie hinzuzufügen.

2. Verarbeitungsverfahren nach Anspruch 1,
wobei die Transaktion als Verschwinden eines Vermögenswertes in dem unteren Netzwerk behandelt wird, und
Vermögenswert-Transfer an das obere Netzwerk durch eine Transaktion in dem oberen Netzwerk durchgeführt wird, welche einen Vermögenswert mit gleichem Wert wie desjenigen Vermögenswertes generiert, welcher aus dem unteren Netzwerk verschwindet.

3. Verarbeitungsverfahren nach Anspruch 1 oder 2, wobei, in der Transaktion des unteren Netzwerks, eine Adresse des unteren Netzwerks eine Quelle des Vermögenswert-Transfers ist und eine Geheimschlüssel-Adresse, welche unbekannt ist, das Ziel des Vermögenswert-Transfers ist.

4. Verarbeitungsverfahren nach einem der Ansprüche 1 bis 3, wobei die Transaktion des unteren Netzwerks einen Ketten-Identifikator besitzt, welcher eine Blockkette des oberen Netzwerks bezeichnet.

5. Programm zum Veranlassen eines Computers zum Ausführen eines Verarbeitungsverfahrens an einem Knoten, welcher eines von einem oder mehreren unteren Netzwerken in einem Netzwerk mit einem oberen Netzwerk bildet und wobei das eine oder die mehreren unteren Netzwerke unterhalb des oberen Netzwerks platziert sind, wobei das Verfahren folgende Schritte umfasst:
Sammeln, durch den Knoten, einer Vielzahl von Transaktionen, umfassend eine Transaktion zum Veranlassen eines Transfers eines Vermögenswertes von einem unteren Netzwerk, in welchem der Knoten eingeschlossen ist, an das obere Netzwerk;
Berechnen, durch den Knoten, des Gesamtbetrags an Vermögenswert-Transfer an das obere Netzwerk, welcher die Transaktion einschließt, und des Gesamtbetrags an Vermögenswert-Transfer vom oberen Netzwerk mit Bezug auf eine Transaktionshistorie zwischen dem unteren Netzwerk, in welchem der Knoten eingeschlossen ist, und anderen Netzwerken;
Erzeugen, durch den Knoten, eines Blocks mit der Transaktion, welche einen Transfer eines Vermögenswertes von einem unteren Netzwerk, in welchem der Knoten eingeschlossen ist, an das obere Netzwerk nur dann veranlasst, wenn der Gesamtbetrag an Vermögenswert-Transfer an das obere Netzwerk den Gesamtbetrag an Vermögenswert-Transfer von dem oberen Netzwerk nicht überschreitet, und
Finalisieren des Blocks, durch den Knoten, unter einer Bedingung, dass Zustimmungen von einer vorbestimmten Anzahl von Knoten innerhalb der Knoten, welche das untere Netzwerk bilden, in welchem der Knoten eingeschlossen ist, erzielt werden, um den Block zu der Transaktionshistorie hinzuzufügen.

6. Knoten, welcher eines von einem oder mehreren unteren Netzwerken in einem Netzwerk mit einem oberen Netzwerk bildet und wobei das eine oder die mehreren unteren Netzwerke unterhalb des oberen Netzwerks platziert sind,
wobei eine Vielzahl von Transaktionen, umfassend eine Transaktion zum Veranlassen eines Transfers eines Vermögenswertes von einem unteren Netzwerk, in welchem der Knoten eingeschlossen ist, an das obere Netzwerk gesammelt wird;
wobei der Gesamtbetrag an Vermögenswert-Transfer an das obere Netzwerk, welcher die Transaktion einschließt, und der Gesamtbetrag an Vermögenswert-Transfer vom oberen Netzwerk mit Bezug auf eine Transaktionshistorie zwischen dem unteren Netzwerk, in welchem der Knoten eingeschlossen ist, und anderen Netzwerken berechnet wird;
wobei ein Block mit der Transaktion, welche einen Transfer eines Vermögenswertes von einem unteren Netzwerk, in welchem der Knoten eingeschlossen ist, an das obere Netzwerk veranlasst hat, nur dann generiert wird, wenn der Gesamtbetrag an Vermögenswert-Transfer an das obere Netzwerk den Gesamtbetrag an Vermögenswert-Transfer von dem oberen Netzwerk nicht überschreitet, und
wobei der Block unter einer Bedingung finalisiert wird, dass Zustimmungen von einer vorbestimmten Anzahl von Knoten innerhalb der Knoten, welche das untere Netzwerk bilden, in welchem der Knoten eingeschlossen ist, erzielt werden, und der Block zu der Transaktionshistorie hinzugefügt wird.

## Revendications

1. Procédé de traitement au niveau d'un nœud constituant un ou plusieurs réseaux inférieurs dans un réseau avec un réseau supérieur, les un ou plusieurs réseaux inférieurs étant placés en-dessous du réseau supérieur, comprenant les étapes de:
collecte, par le nœud, d'une pluralité de transactions comprenant une transaction pour amener un transfert d'un actif d'un réseau inférieur dans lequel le nœud est inclus vers le réseau supérieur;
calcul, parle nœud, de la quantité totale de transfert d'actif vers le réseau supérieur incluant la transaction et la quantité totale de transfert d'actif du réseau supérieur avec une référence à un historique de transaction entre le réseau inférieur dans lequel le nœud est inclus et d'autres réseaux;
génération, par le nœud, d'un bloc avec la transaction qui amène à un transfert d'un actif d'un réseau inférieur dans lequel le nœud est inclus au réseau supérieur seulement si la quantité totale de transfert d'actif au réseau supérieur n'excède pas la quantité totale de transfert d'actif depuis le réseau supérieur, et
la finalisation, par le nœud, du bloc sous une condition selon laquelle les approbations d'un nombre prédéterminé de nœuds à l'intérieur des nœuds constituant le réseau inférieur dans lequel le nœud est inclus sont obtenues pour ajouter le bloc à l'historique des transactions.

2. Procédé de traitement selon la revendication 1,
dans lequel la transaction est traitée comme une disparition d'un actif dans le réseau inférieur, et
un transfert d'actif au réseau supérieur est réalisé par une transaction dans le réseau supérieur qui génère un actif de valeur équivalente à l'actif disparaissant du réseau inférieur.

3. Procédé de traitement selon la revendication 1 ou 2, dans lequel dans la transaction du réseau inférieur une adresse du réseau inférieur est source de transfert d'actif et une clé secrète d'adresse qui n'est pas connue est une destination d'un transfert d'actif.

4. Procédé de traitement selon l'une quelconque des revendications 1 à 3, dans lequel la transaction du réseau inférieur possède un identifiant de chaîne désignant une chaîne de blocs du réseau supérieur.

5. Programme pour qu'un ordinateur effectue un procédé de traitement au niveau d'un nœud constituant l'un d'un ou plusieurs réseaux inférieurs dans un réseau avec un réseau supérieur, les un ou plusieurs réseaux inférieurs étant placés en-dessous du réseau supérieur, le procédé comprenant les étapes de:
collecte, par le nœud, d'une pluralité de transactions comprenant une transaction pour amener un transfert d'un actif d'un réseau inférieur dans lequel le nœud est inclus au réseau supérieur;
calcul, par le nœud, de la quantité totale de transfert d'actif au réseau supérieur incluant la transaction et de la quantité totale de transfert d'actif du réseau supérieur avec une référence à un historique de transaction entre le réseau inférieur dans lequel le nœud est inclus et d'autres réseaux;
la génération, par le nœud, d'un bloc avec la transaction qui amène à un transfert d'un actif d'un réseau inférieur dans lequel le nœud est inclus au réseau supérieur seulement si la quantité totale de transfert d'actif au réseau supérieur n'excède pas la quantité totale de transfert d'actif du réseau supérieur, et
la finalisation, par le nœud, du bloc sous une condition selon laquelle les approbations provenant d'un nombre prédéterminé de nœuds dans les nœuds constituant le réseau inférieur dans lequel le nœud est inclus sont obtenues pour ajouter le bloc à l'historique de transaction.

6. Nœud constituant l'un d'un ou plusieurs réseaux inférieurs dans un réseau avec un réseau supérieur, les un ou plusieurs réseaux inférieurs étant placés en-dessous du réseau supérieur,
dans lequel une pluralité de transactions comprenant une transaction pour amener un transfert d'un actif d'un réseau inférieur dans lequel le nœud est inclus au réseau supérieur est collectée;
dans lequel la quantité totale de transfert d'actif au réseau supérieur incluant la transaction et la quantité totale de transfert d'actif du réseau supérieur en référence à un historique de transaction entre le réseau inférieur dans lequel le nœud est inclus et d'autres réseaux est calculée;
dans lequel un bloc avec la transaction qui amène à un transfert d'un actif d'un réseau inférieur dans lequel le nœud est inclus au réseau supérieur est généré seulement si la quantité totale de transfert d'actif au réseau supérieur n'excède pas la quantité totale de transfert d'actif du réseau supérieur, et
dans lequel le bloc est finalisé sous une condition selon laquelle les approbations provenant d'un nombre prédéterminé de nœuds dans les nœuds constituant le réseau inférieur dans lequel le nœud est inclus sont obtenues et le bloc est ajouté à l'historique de transaction.
